# EUROPÄISCHE PATENTSCHRIFT

(11) **EP 0 481 186 B1**
(45) Veröffentlichungstag und Bekanntmachung des Hinweises auf die Patenterteilung: **15.03.1995**
(21) Anmeldenummer: 91113758.6
(22) Anmeldetag: 16.08.1991
(51) Int. Cl.: B23D 45/04, B23D 45/14

(54) **Gehrungskappsäge**
Oscillating mitre saw
Scie à onglet oscillante

(30) Priorität: 18.10.1990 DE 4033037
(43) Veröffentlichungstag der Anmeldung: 22.04.1992
(73) Patentinhaber: STAYER S.p.A., I-44100 Ferrara (IT)
(72) Erfinder: Lutz, Eugen, W-7130 Mühlacker-Lomersheim (DE); Bergler, Otto, W-7130 Mühlacker 3 (DE)
(74) Vertreter: Lanzoni, Luciano

(56) Entgegenhaltungen:
- EP-A- 0 379 322
- DE-A- 3 711 358
- DE-B- 2 412 822
- DE-U- 1 854 266
- FR-A- 1 228 244
- FR-A- 1 395 123
- US-A- 1 746 594

## Beschreibung

Die Erfindung betrifft eine Gehrungskappsäge mit einem rotierenden Sägeblatt, das am freien Ende eines Schwenkarmes gelagert ist, dessen Schwenkachse unterhalb der Ebene der Werkstückauflage eines Sägetisches liegt.

Kappsägen dieser Art sind bekannt (DE-AS 24 12 822). Bei diesen Sägen ist die Schwenkachse des Schwenkarmes in einem Bereich hinter einem Werkstückanschlag angeordnet, der die Werkstückauflagefläche nach hinten begrenzt. Hinter dem Anschlag ist ein Gehäuse vorgesehen, in dem das Sägeblatt in der Außerbetriebsstellung vollkommen aufgenommen wird. Es wird durch die Schwenkbewegung des Schwenkarmes von hinten durch eine entsprechende Öffnung im Anschlag hindurch und in ein Werkstück hereingeführt. Der Schwenkarm selbst ist dabei seinerseits auf einer Schwenkführung angeordnet, die es erlaubt, das Sägeblatt auch schräg zur Werkstückauflagefläche einzustellen. Bei diesen Sägeaggregaten, bei denen das Sägeblatt unmittelbar auf einer Motorwelle sitzt und mit dem Motor am freien Ende des Schwenkarmes angeflanscht ist, wird der Schneidbereich vom Durchmesser des Sägeblattes bestimmt. Da der Motor selbst konzentrisch zur Drehachse des Sägeblattes liegt, sind auch seine Abmessungen mitbestimmend für den Schnittbereich. Um daher einen großen Schnittbereich zu erreichen, ist es notwendig, auch Sägeblätter mit großem Durchmesser einzusetzen. Dies kann bei gewissen Bearbeitungsvorgängen zu einer Beeinträchtigung der Schnittgenauigkeit führen.

Es ist auch bekannt (DE-OS 37 11 358), das Sägeblatt über einen Riementrieb anzutreiben und den Motor versetzt zu der Achse des Sägeblattes auf dem Schwenkarm anzuordnen. Bei solchen Bauarten wird daher der Schnittbereich nicht durch die Motorabmessungen beeinflußt. Für den Schnittbereich gilt aber trotzdem das gleiche wie bei der vorher beschriebenen Säge. Der Schnittbereich bleibt durch den Durchmesser des Sägeblattes begrenzt. Die dort gewählte Anordnung der Schwenkachse für den Schwenkarm in einem Bereich etwas oberhalb der Werkstückauflagefläche und auf der von der Werkstückauflagefläche weit abgewandten Seite der Einrichtung bringt dort zwar gewisse Vorteile für den Schnittbereich, weil das Sägeblatt von oben her in das Werkstück eintauchen kann, ohne daß jedoch die Drehachse des Sägeblattes selbst über die Anschlagfläche nach vorne heraustritt, für die Bearbeitung breiter Werkstücke aber gilt das gleiche wie bei der vorher erwähnten Säge.

Es ist schließlich auch bekannt, in der Art einer Tischsäge das Sägeblatt von unten nach oben durch einen Schlitz in einem Werkstücktisch mit Hilfe eines Schwenkarmes hochzuschwenken (DE-OS 28 11 615), dessen Schwenkachse ebenfalls unterhalb der Ebene der Werkstückauflagefläche in einem Bereich liegt, der wie bei der eingangs erwähnten Säge auf der von der Werkstückauflage abgewandten Seite des Anschlages liegt. Auch bei diesen Bauarten ist daher, weil die Lagerung des Sägeblattes nicht beliebig klein gemacht werden kann, der Schnittbereich durch die Größe des Sägeblattes bestimmt. Auch in diesem Fall muß daher für größere Schneidbereiche auch ein größeres Sägeblatt eingesetzt werden.

Es ist schließlich aber auch bekannt, den Schnittbereich mit Hilfe von kleineren Sägeblättern mit Hilfe sogenannter Zugsägen zu vergrößern (DE-PS 33 29 496), bei denen das Sägeaggregat an einem Schwenkarm geführt ist, der aus Führungsstangen für das Sägeaggregat besteht, welches in der Art eines Schlittens nach dem Abschwenken des Schwenkarmes in der Längsrichtung der Führungsstangen durch das Werkstück gezogen werden kann, nachdem das Sägeblatt von oben in das Werkstück eingetaucht ist. Solche Bauarten geben zwar die Möglichkeit, wegen des kleineren Sägeblattes eine handlichere Bauform zu verwirklichen, die Schnittgenauigkeit hängt aber von der Genauigkeit der Längsführung des Sägeaggregates an den Führungsstangen ab. Auch der Herstellungsaufwand für eine solche Führung ist verhältnismäßig hoch.

Der vorliegenden Erfindung liegt daher die Aufgabe zugrunde, eine Gehrungskappsäge der eingangs genannten Art so auszubilden, daß der Schnittbereich ohne die Verwendung einer Längsführung auch bei Verwendung eines Sägeblattes mit verhältnismäßig kleinem Durchmesser vergrößert werden kann.

Zur Lösung dieser Aufgabe wird eine Gehrungskappsäge gemäß Anspruch 1 vorgeschlagen. Sie erlaubt es trotz der ausschließlichen Verwendung eines Schwenkarmes, das Sägeblatt in der Art einer Zugsäge von hinten durch den Anschlag hindurch etwa parallel zur Werkstückauflagefläche führen zu können, weil das Sägeblatt wegen der Wahl der Schwenkachse des Schwenkarmes in diesem Bereich etwa längs einer parallel zur Werkstückauflagefläche verlaufenden Tangente des Schwenkkreises geführt wird. Die U-Bügelform erlaubt es dabei, daß der Schwenkarm den Anschlag und das Werkstück übergreift. Die neue Ausgestaltung weist den großen Vorteil auf, daß nur eine einfache, leicht und genau zu verwirklichende Schwenklagerung für den Schwenkarm notwendig ist und auf eine verhältnismäßig aufwendige Längsführung des Sägeaggregates verzichtet werden kann.

Weiterbildungen der Erfindung sind in den Unteransprüchen gekennzeichnet. Vorteilhaft ist es dabei nach den Merkmalen des Anspruches 3, daß der offene Teil des U-Bügels einen der Werkstückauflage zugeordneten Werkstückanschlag ganz und die Werkstückauflage zumindest zum Teil übergreift. Die Werkstücke können daher in der gewohnten Weise an der freien Seite des Sägetisches her aufgelegt, an den Anschlag geschoben und ggf. festgespannt werden, ehe der Sägehub durchgeführt wird. Dabei ist es nach den Merkmalen des Anspruches 4 auch vorteilhaft, wenn das Sägeblatt über einen Riementrieb o.dgl. von einem an dem das Sägeblatt tragenden Schenkel des U-Bügels angeordneten Motor angetrieben ist. Die Größe des Motorgehäuses spielt dann keine Rolle dafür, wie weit das Sägeblatt selbst in das Werkstück eintauchen kann. Nach den Merkmalen des Unteranspruches 5 ist es besonders vorteilhaft, wenn der U-Bügel an einem Rundtisch gelagert ist, der schwenkbar in einer Ausnehmung des Sägetisches angeordnet ist. Diese Ausführungsform läßt sich vorteilhaft dann weiterentwickeln, wenn der Sägetisch als ein in der Draufsicht etwa U-förmiger Rahmen ausgebildet ist, in dessen Quersteg der Rundtisch gelagert ist, und wenn nach den Merkmalen des Anspruches 7 der Quersteg über die Lagerung des Rundtisches nach oben vorsteht und mit der die Werkstückauflage bildenden Oberfläche des Rundtisches fluchtende seitliche Auflageflächen bildet.

Nach den Merkmalen des Anspruches 8 können die Auflageflächen durch eine winkelförmige Aussparung voneinander getrennt sein, in der ein vom Rundtisch abstehender und einen Eintauschschlitz im Rundtisch verlängernder Arm bewegbar ist. Da bei der gewählten Ausführungsform das Sägeblatt im wesentlichen parallel zur Werkstückauflage und nur am Anfang und am Schluß der Schwenkbewegung in einem gewissen Winkel zur Auflagefläche geführt wird, kann der Eintauchschlitz auch als eine nach unten geschlossene Nut ausgebildet sein, die dann den Vorteil bildet, daß das Sägeblatt von unten gegen eine Berührung gesichert ist.

Nach den Merkmalen des Anspruches 10 können die seitlichen Auflageflächen des Quersteges auf der von der Aussparung abgewandten Seite durch eine Werkstückanschlagleiste begrenzt sein, die eine Durchtrittsöffnung für das Sägeblatt aufweist. Um die Schwenkbewegung des Schwenkarmes zu erleichtern, können nach den Merkmalen des Anspruches 11 am Rundtisch eine das Gewicht des Sägeaggregates und des U-Bügelschwenkarmes ausgleichende Zugfedern angebracht sein. Diese Ausführungsform erlaubt den Einsatz der neuen Gehrungskappsäge als handbetätigte Gehrungssäge. Natürlich ist es auch möglich, einen Antrieb für die Verschwenkung des Schwenkarmes und des Sägeaggregates vorzusehen.

Nach Anspruch 12 ergibt sich eine günstige Bauform, wenn die Schenkel des U-förmigen Rahmens etwa in der Ebene der Lagerung des Rundtisches und deutlich unterhalb der Auflageflächen für das Werkstück verlaufen. Es entsteht dann nämlich hinter dem Rahmen des Sägetisches ein freier Platz für die Schwenkbewegung des Schwenkarmes und der daran angeordneten Teile. Es lassen sich dadurch ungehinderte Schwenkbewegungen nach beiden Seiten um etwa 45° durchführen, ohne daß der Bauaufwand oder der Platzbedarf für die neue Säge zu groß wird. Die Merkmale des Anspruches 13 erlauben eine einfache Handhabung für den Fall des Handbetriebes.

Die Merkmale der Ansprüche 14 und 15 schließlich lassen eine zusätzliche Verwendungsmöglichkeit der neuen Säge zu, die mit den Merkmalen des Anspruches 16 zusammen den Einsatz der neuen Säge auch als Tischsäge ermöglichen.

Die Erfindung ist anhand eines Ausführungsbeispieles in den Zeichnungen dargestellt und wird im folgenden erläutert. Es zeigen:
- Fig. 1: einen schematischen Teillängsschnitt durch eine Gehrungskappsäge gemäß der Erfindung,
- Fig. 2: die Draufsicht auf die Gehrungskappsäge der Fig. 1 und
- Fig. 3: die Gehrungskappsäge der Fig. 1, jedoch mit einem zusätzlichen Aufsetztisch für den Einsatz als Tischsäge.

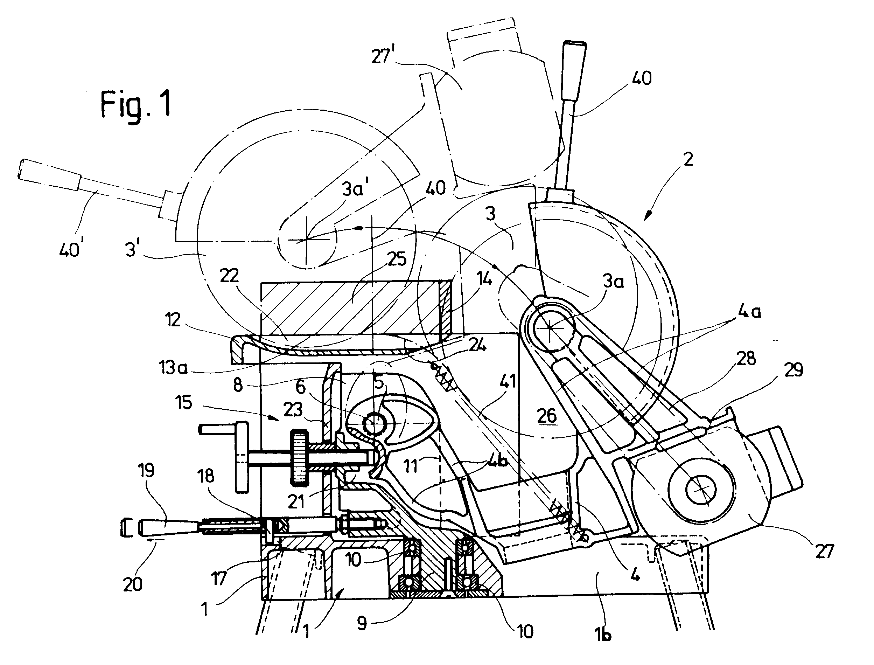

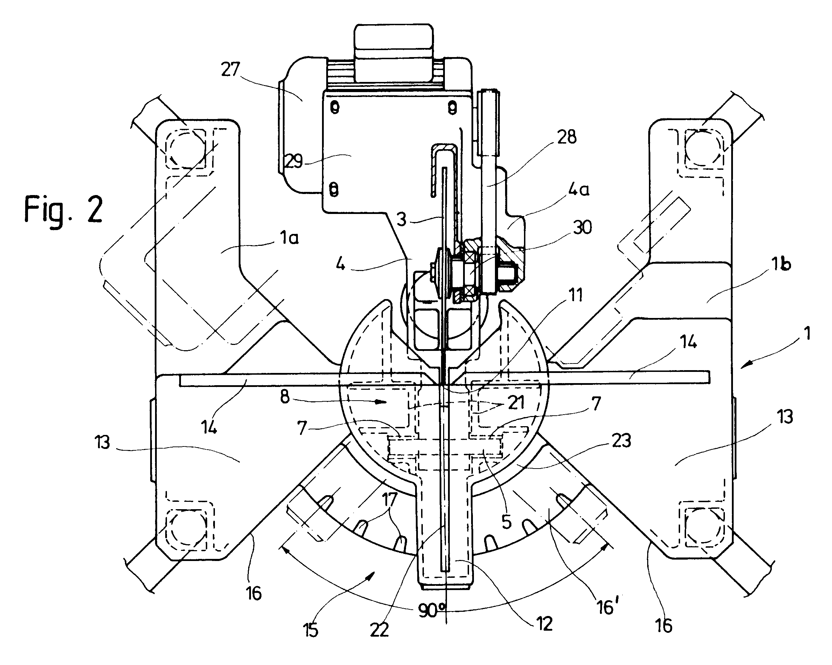

In den Fig. 1 und 2 ist schematisch ein Sägetisch (1) gezeigt, der auf vier Beinen aufstellbar ist und in dem ein Sägeaggregat (2) schwenkbar gelagert ist. Das Sägeaggregat (2) besteht dabei aus einem drehbar gelagerten Sägeblatt (3), das an dem freien Ende eines Schenkels (4a) eines im wesentlichen als U-Bügel (4) ausgebildeten Schwenkarmes gelagert, der mit seinem anderen Schenkel (4b) mit einem Bolzen (5) um die Schwenkachse (6) verschwenkbar gelagert ist. Der Bolzen (5) sitzt dabei, wie insbesondere aus Fig. 2 hervorgeht, in seitlichen Lagern (7) eines Rundtisches (8), der seinerseits mit einem Zapfen (9) über Kugellager (10) schwenkbar um die Achse (11) im Sägetisch (1) geführt ist. Die Schwenkachse (6) des U-Bügels (4), der als verrippter stabiler Gußteil beispielsweise aus Aluminium hergestellt ist, liegt dabei unterhalb einer Werkstückauflage. Unter dem "Bereich unterhalb der Werkstückauflage" wird dabei der Bereich verstanden, der sich von unterhalb der Anschlagleiste (14) aus nach links bis unter das Ende des strichpunktiert angedeuteten Schnittbereiches (25) des Sägeblattes (3) erstreckt. Die Schwenkachse (6) muß bei der neuen Säge in diesem Bereich unterhalb der Werkstückauflage liegen. Sie wird vorteilhaft in eine Vertikalebene (40) gelegt, die etwa durch die Mitte des Schnittbereiches (25) verläuft. Die Schwenkbewegung des Sägeblattes verläuft im Bereich dieser Vertikalebene etwa parallel zur Werkstückauflage, was gewünscht ist, um den großen Schnittbereich zu erzielen. Die Werkstückauflage ist beim Ausführungsbeispiel aus einem vom Rundtisch (8) abstehenden Arm (12) und zwei Auflageflächen (13) des Sägetisches (1) gebildet, deren Oberflächen mit der Oberfläche des Rundtisches (8) und des Armes (12) fluchten und die beide zur Mitte des Sägetisches (1) hin von einer Anschlagleiste (14) nach hinten begrenzt sind. Zwischen den beiden Auflageflächen (13) befindet sich eine nach unten erstreckende Ausnehmung (15), deren beide Seitenwände (16) unter einem Winkel von 90° zueinander und in der in der Fig. 2 gezeigten Mittellage des Rundtisches (8) zu der Ebene, in der das Sägeblatt (3) verläuft, einen Winkel von je 45° aufweisen. Etwa in der Höhe des Lagerzapfens (9) des Rundtisches (8) befindet sich als Abschluß der Ausnehmung (15) ein in der Art einer Skala ausgebildetes Bogenteil (16), an dessen kreisbogenförmig verlaufender Außenkante Raststellen (17) in Form von nach außen offenen Nuten angebracht sind, in die ein Raststift (18) eines axial in Richtung des Pfeiles (20) herausziehbaren Arretierungshebels greifen können, der fest mit dem Rundtisch (8) verbunden ist (Fig. 1).

Fig. 1 und 2 machen auch deutlich, daß der Sägetisch (1) im wesentlichen die Form eines U-förmigen Rahmens aufweist, dessen beide Schenkel (1a und 1b) wesentlich tiefer liegen als der Teil des Sägetisches (1), der die beiden Auflageflächen (13) und den fluchtend dazu angeordneten Rundtisch (8) mit dem Arm (12) trägt. Der die beiden Schenkel (1a und 1b) verbindende Quersteg des U-förmigen Sägetisches (1) ist, wie Fig. 1 erkennen läßt, von der Lagerung für den Lagerzapfen (9) des Rundtisches aus nach oben gezogen, bis zu den Oberflächen (13a) der beiden Auflageflächen (13). Der Rundtisch (8) besitzt in diesem Bereich zwei parallel zueinander verlaufende Wangen (21), in denen die beiden Lager (7) für den Schwenkzapfen (5) angeordnet sind. Die Fig. 1 zeigt auch, daß der Sägetisch (1) eine Führungswand (23) aufweist, die sich aus dem unteren Bereich des Quersteges des Sägetisches (1) nach oben erstreckt und mit ihrem oberen Rand als Auflage für den Arm (12) dient. Die Wand (23) ist dabei als Teil eines Zylinders ausgeführt, dessen Innendurchmesser dem Außendurchmesser des Rundtisches (8) entspricht.

Wie Fig. 1 auch zeigt, ist in dem Arm (12) eine Nut (22) vorgesehen, deren Tiefe auf die maximale Eintauchtiefe des Sägeblattes (3) in der Endstellung (3') abgestimmt ist. In der Fig. 1 sind außerdem als Kreisbögen um die Schwenkachse (6) die Verbindungslinien jeweils der Sägeblattachse (3a) in der Ausgangsstellung und in der Endstellung (3a') eingezeichnet, sowie strichpunktiert eine Grenzlinie (24) angedeutet, an der sich bei der Schwenkbewegung des U-Bügels (4) die Peripherie des Sägeblattes (3) entlangbewegt. Es ist daher zu erkennen, daß das Sägeblatt (3) bei der Schwenkbewegung einen enorm großen und sich in der Richtung des Armes (12) erstreckenden Schnittbereich trotz seines relativ kleinen Durchmessers durchläuft, der der Anschaulichkeit halber gestrichelt und mit dem Bezugszeichen (25) gekennzeichnet ist. Dieser große Schnittbereich (25) wird dadurch erreicht, daß sich ausgehend von der Lage des U-Bügels (4) in der Fig. 1, dessen Schenkel (4a) über die Anschlagleiste (14) hinwegbewegt, die sich in den Zwischenraum (26) zwischen den beiden Schenkeln (4a und 4b) des U-Bügels (4) bei der Verschwenkung des Sägeblattes (3) aus der Lage (3) in die Endlage (3') hineinbewegt. Die Sägeblattachse (3a) wird dabei nach dem Überschreiten der Anschlagleiste (14) in einem Bogen über die Werkstückauflage (12, 13) geführt, der relativ flach ist und der seinen Mittelpunkt unterhalb der Werkstückauflage besitzt. Durch die erfindungsgemäße Ausgestaltung wird es daher möglich, trotz der Verwendung eines relativ kleinen Sägeblattdurchmessers einen großen Schnittbereich zu durchfahren.

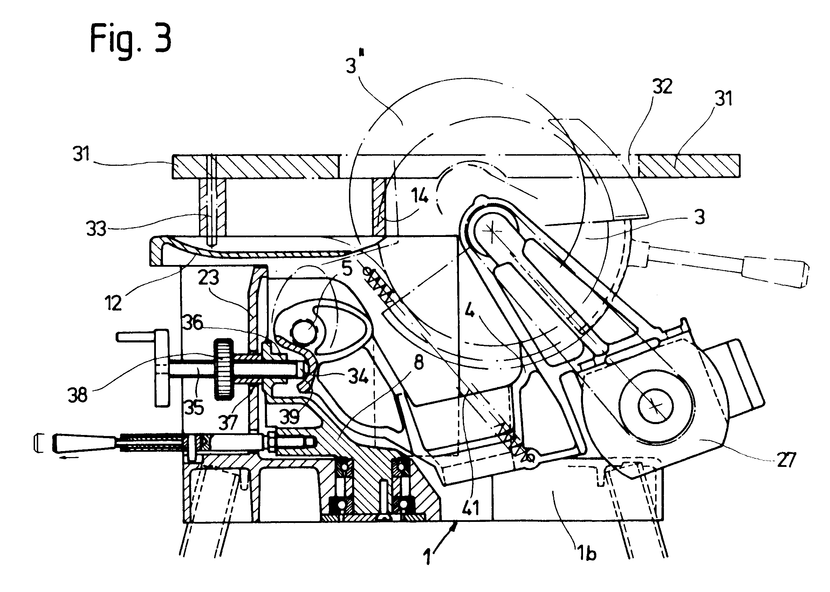

Aus den Fig. 1 und 3 geht außerdem hervor, daß das Sägeblatt (3) nicht achsgleich mit dem Antriebsmotor (27) gelagert ist, sondern daß dieser über einen Riemen (28) das Sägeblatt (3) antreibt. Der U-Bügel (4) ist zur Montage des Motors (27) mit einem Flanschteil (29) versehen, auf dem der Motor in an sich bekannter Weise zur Spannung des Riemens (28) auch etwas hin- und herfahrbar ist. Die Lagerung des Sägeblattes (3) erfolgt über eine Lagerachse (30) am freien Ende des Schenkels (4a).

Nachzutragen ist noch, daß - ebenfalls in bekannter Weise - die Schwenkachse (11) des Rundtisches (8) durch den Schnittpunkt zwischen der Vorderseite der Anschlagleiste (14) und der Sägeblattebene verläuft.

Aus der Fig. 3 ist zu erkennen, daß ein Aufsatztisch (31) mit einem Tisch (32) vorgesehen sein kann, der auf die Auflageflächen (13) und den Arm (12) aufsetzbar gestaltet ist. Dieser Aufsetztisch (31), der auf die Anschlagleiste (14) und auf Stützsäulen (33) fest aufgesetzt wird, dient dazu, die Gehrungskappsäge auch als Tischsäge einsetzen zu können, wenn das gewünscht ist. Zu diesem Zweck ist der den U-Bügel mit dem daran angeordneten Motor (27) und dem Sägeblatt der in der Fig. 3 untersten Lage haltende Anschlag (34) in der Form einer Stellspindel (35) ausgebildet, die in einem Gewinde (36) des Rundtisches (8) in ihrer Längsrichtung verstellbar gehalten ist. Die Spindel (35) greift zu diesem Zweck durch einen horizontalen Schlitz (37) in der Wand (23) hindurch und kann in der eingestellten Lage durch eine als Rändelmutter ausgebildete Konterschraube (38) fixiert werden, die über eine Zwischenhülse gegen das Gewinde (36) am Rundtisch (8) drückt. Der Gegenanschlag am Rundtisch (8) ist in der Form einer Hohlkurve (39) ausgebildet, die es erlaubt, daß der U-Bügel (4) mit dem Sägeblatt (3) zum Beispiel aus der gezeigten Stellung in die Lage (3'') hochgestellt wird. Die Schnittiefe für das Tischsägen kann auf diese Weise eingestellt werden.

Um diesen Verstellvorgang, vor allen Dingen aber den von Hand erfolgenden Hochschwenkvorgang des Sägeaggregates für das Gehrungskappsägen nach Fig. 1 und 2 mit Hilfe eines Handgriffes (40) zu erleichtern, ist der U-Bügel (4) mit einer oder mehreren Zugfedern (41) verbunden, die mit ihrem anderen Ende an einer der Wangen (21) des Rundtisches (8) befestigt sind.

Natürlich ist es auch möglich, anstelle eines Handhebels (40) und anstelle des von Hand durchführbaren Schwenkbetriebes einen Antrieb für den U-Bügelarm (4) in der Form eines hydraulischen Zylinders vorzusehen, wenn dies gewünscht ist. Möglich ist es auch, die Schwenkachse (6) des U-Bügels (4) dadurch um etwa 45° nach mindestens einer Seite zu einer Vertikalebene neigbar zu machen, daß die Lagerung der Schwenkachse in einer Kulissenführung erfolgt, der Schwenkachse durch die Werkstückauflagefläche und durch die Sägeblattebene verläuft. Es können dann auch Schrägschnitte durchgeführt werden. Die Kulissenführung kann am Rundtisch angebracht sein, so daß die übrige Funktion unbeeinflußt bleibt.

## Patentansprüche

1. Gehrungskappsäge mit einem rotierenden Sägeblatt und einem in der Art eines U-Bügels (4) ausgebildeten Schwenkarm, an dessen freien Enden die Lagerung des Sägeblatts (3) und die Schwenkachse (6) angeordnet sind, wobei die Schwenkachse unterhalb der Werkstückauflage eines Sägetisches liegt und beim Sägen der offene Teil (26) des U-Bügels (4) einen der Werkstückauflage (12, 13) zugeordneten Werkstückanschlag (14) ganz und die Werkstückauflage (12, 13) zumindest zum Teil übergreift.

2. Gehrungskappsäge nach Anspruch 1, dadurch gekennzeichnet, daß die Schwenkachse (6) in einer Vertikalebene (40) liegt, die etwa durch die Mitte der Werkstückauflage (Mitte des Schnittbereiches 25) verläuft.

3. Gehrungskappsäge nach Anspruch 1, dadurch gekennzeichnet, daß der offene Teil (26) des U-Bügels (4) einen der Werkstückauflage (12, 13) zugeordneten Werkstückanschlag (14) ganz und die Werkstückauflage (12, 13) zumindest zum Teil übergreift.

4. Gehrungskappsäge nach den Ansprüchen 1 bis 3, dadurch gekennzeichnet, daß das Sägeblatt (3) über einen Riementrieb (28) o.dgl. von einem an dem das Sägeblatt tragenden Schenkel (4a) des U-Bügels (4) angeordneten Motor (27) angetrieben ist.

5. Gehrungskappsäge nach den Ansprüchen 1 bis 4, dadurch gekennzeichnet, daß der U-Bügel (4) an einem Rundtisch (8) gelagert ist, der schwenkbar in einer Ausnehmung (15) des Sägetisches (1) gelagert ist.

6. Gehrungskappsäge nach Anspruch 5, dadurch gekennzeichnet, daß der Sägetisch (1) als ein in der Draufsicht etwa U-förmiger Rahmen ausgebildet ist, in dessen Quersteg der Rundtisch (8) gelagert ist.

7. Gehrungskappsäge nach Anspruch 6, dadurch gekennzeichnet, daß der Quersteg über die Lagerung (9, 10) des Rundtisches (8) nach oben vorsteht, eine als Teil eines Zylinders ausgebildete Führungswand (23) aufweist, die als Führung für den Rundtisch dient und mit der die Werkstückauflage bildenden Oberfläche des Rundtisches (8) fluchtende seitliche Auflageflächen (13) bildet.

8. Gehrungskappsäge nach Anspruch 7, dadurch gekennzeichnet, daß die seitlichen Auflageflächen (13) durch eine winkelförmige Aussparung (15) voneinander getrennt sind, in der ein vom Rundtisch abstehender und einen Eintauchschlitz (22) im Rundtisch (8) verlängerter Arm (12) bewegbar ist.

9. Gehrungskappsäge nach Anspruch 8, dadurch gekennzeichnet, daß der Eintauchschlitz als eine nach unten geschlossene Nut (22) ausgebildet ist.

10. Gehrungskappsäge nach den Ansprüchen 7 und 8, dadurch gekennzeichnet, daß die seitlichen Auflageflächen (3) des Quersteges auf der von der Aussparung (15) abgewandten Seite durch eine Werkstückanschlagleiste (14) begrenzt sind, die eine Durchtrittsöffnung für das Sägeblatt (3) aufweist.

11. Gehrungskappsäge nach einem der Ansprüche 5 bis 10, dadurch gekennzeichnet, daß am Rundtisch (8) eine das Gewicht des Sägeaggregates und des U-Bügels (4) ausgleichende Zugfeder (41) angebracht ist.

12. Gehrungskappsäge nach den Ansprüchen 6 und 7, dadurch gekennzeichnet, daß die Schenkel (4a, 4b) des U-förmigen Rahmens (4) etwa in der Ebene der Lagerung (10, 9) des Rundtisches tisches (8) und deutlich unterhalb der Auflageflächen (13) verlaufen.

13. Gehrungskappsäge nach einem der Ansprüche 1 bis 12, dadurch gekennzeichnet, daß dem Sägeaggregat und dem freien Ende des dieses tragenden Schenkels (4a) des U-Bügels (4) ein Betätigungsgriff (14) für das Gehrungssägen zugeordnet ist.

14. Gehrungskappsäge nach einem der Ansprüche 5 bis 13, dadurch gekennzeichnet, daß ein Endanschlag (34) für die abgekippte Außerbetriebstellung des Sägeaggregates am Rundtisch (8) vorgesehen ist.

15. Gehrungskappsäge nach Anspruch 14, dadurch gekennzeichnet, daß der Endanschlag (34) verstellbar ist.

16. Gehrungskappsäge nach Anspruch 15, dadurch gekennzeichnet, daß im Rundtisch (8) ein auf diesen und die seitlichen Auflageflächen (13) aufsetzbarer Zusatztisch (31) für den Einsatz zum Tischsägen zugeordnet ist, der einen Durchtrittsschlitz (32) für das Sägeblatt (3) aufweist.

## Claims

1. A mitre-box circular cross-cut saw with a rotating saw disc and a swivel arm designed in the manner of a stirrup (4), attached to the free end of which is the support for the saw disc (3) and the swivel pin (6), whereby the swivel arm is located below the workpiece support on a saw table and during sawing the open part (26) of the stirrup (4) overlaps the whole of a workpiece stop (14) connected to the workpiece support (12, 13) and at least part of the workpiece support (12, 13).

2. A mitre-box circular cross-cut saw in accordance with claim 1, characterized in that the swivel pin (6) is positioned on a vertical plane (40) which runs roughly through the centre of the workpiece support (centre of the cutting area 25).

3. A mitre-box circular cross-cut saw in accordance with claim 1, characterised in that the open part (26) of the stirrup (4) overlaps the whole of a workpiece stop (14) connected to the workpiece support (12, 13) and at least part of the workpiece support (12, 13).

4. A mitre-box circular cross-cut saw in accordance with claims 1 to 3, characterised in that the saw disc (3) is driven by a motor (27) located on the leg of the stirrup (4) supporting the saw disc via a belt drive (28) or similar device.

5. A mitre-box circular cross-cut saw in accordance with claims 1 to 4, characterised in that the stirrup (4) is supported on a round table (8) which is supported in a recess (15) in the saw table (1) so that it can swivel.

6. A mitre-box circular cross-cut saw in accordance with claim 5, characterised in that from a top view the saw table (1) is designed as an approximately U-shaped frame in the cross piece of which the round table (8) is supported.

7. A mitre-box circular cross-cut saw in accordance with claim 6, characterized in that the cross piece protrudes above the support (9, 10) of the round table (8), has a guide wall (23) designed as part of a cylinder which serves as a guide for the round table and with which the surface of the round table (8) which forms the workpiece support forms aligned, lateral supporting surfaces (13).

8. A mitre-box circular cross-cut saw in accordance with claim 7, characterised in that the lateral supporting surfaces (13) are separated by an angular recess (15) in which an arm protruding from the round table and extended by a slit (22) in the round table (8) can be moved.

9. A mitre-box circular cross-cut saw in accordance with claim 8, characterised in that the slit takes the form of a groove which is closed underneath (22).

10. A mitre-box circular cross-cut saw in accordance with claims 7 and 8, characterized in that the lateral supporting surfaces (13) of the cross piece are limited on the side opposite the recess (15) by a workpiece stop bar (14) which has an opening for the saw disc (3).

11. A mitre-box circular cross-cut saw in accordance with one of claims 5 to 10, characterized in that an extension spring (41) which counterbalances the weight of the saw unit and the stirrup (4) is attached to the round table (8).

12. A mitre-box circular cross-cut saw in accordance with claims 6 and 7, characterized in that the legs (4a, 4b) of the U-shaped frame (4) run in approximately the same plane as the support (10, 9) of the round table (8) and clearly below the supporting surfaces (13).

13. A mitre-box circular cross-cut saw in accordance with one of claims 1 to 12, characterised in that an operating handle (14) for the mitre-box saw is fitted to the saw unit and to the free end of the leg of the stirrup (4) which supports it.

14. A mitre-box circular cross-cut saw in accordance with one of claims 5 to 13, characterized in that an end stop (34) for the tilted OFF position of the saw unit is fitted to the round table (8).

15. A mitre-box circular cross-cut saw in accordance with claim 14, characterized in that the end stop (34) can be adjusted.

16. A mitre-box circular cross-cut saw in accordance with claim 15, characterized in that in the round table (8) is located an additional table (31) which can be placed on the table and the lateral supporting surfaces (13) for the use of table saws and which has a slit (32) through which the saw disc can pass.

## Revendications

1. Scie oscillante à onglet avec une lame de scie rotative et un bras articulé du type conformé en "U" (4), aux extrémités libres duquel sont disposés les paliers de la lame de scie (3) et les axes d'articulation (6) de sorte que les axes d'articulation soient disposés au-dessous du support des pièces de travail et que pendant la sciage la partie ouverte (26) de la bride en "U" (4) empiète une butée (14) étant disposée sur les surfaces d'appui (12, 13) des pièces à scier, et au moins en partie les surfaces d'appui (12, 13) des pièces.

2. Scie oscillante à onglet selon la revendication 1, caractérisée en ce que les axes d'articulations (6) s'étendent dans un plan vertical sensiblement au milieu de la surface d'appui de travail des pièces (milieu de la région de coupe (25)).

3. Scie oscillante à onglet selon la revendication 1, caractérisée en ce que la partie ouverte (26) des brides en "U" (4) empiète completement une butée de pièce (14) d'une surface d'appui des pièces (12, 13) et au moins en partie les surfaces d'appui des pièces (12, 13).

4. Scie oscillante à onglet selon les revendications 1 à 3 caractérisée en ce que la lame de scie (3) est entraînée par une courroie (28) ou analogue à partir d'un moteur (27) disposé sur les branches (4a) de la bride en "U" (4).

5. Scie oscillante à onglet selon les revendications 1 à 4, caractérisée en ce que le "U" (4) repose sur une table circulaire (8) et est articulé dans une prise (15) du bâti (1) de la scie.

6. Scie oscillante à onglet selon la revendication 5, caractérisée en ce que le bâti (1) de scie est composé en vue par dessus d'un cadre en "U" dans lequel est tourillonnée la manette de commande transversale de la table circulaire (8).

7. Scie oscillante à onglet selon la revendication 6, caractérisée en ce que la manette transversale repose sur des paliers (9, 10) de la table circulaire (8) et comprend en tant que composant un cylindre constituant une paroi de guidage (23) qui sert de guidage pour la table circulaire et des surfaces latérales (13) constituant les surfaces d'appui des pièces sur la surface supérieure de la table circulaire (8).

8. Scie oscillante à onglet selon la revendication 7, caractérisée en ce que les surfaces latérales de la surface (13) comprennent un évidement avec des ailes (15) séparées l'une de l'autre dans la table circulaire et une fente de prise (22) dans la table circulaire (8) dans laquelle est monté un bras mobile (12).

9. Scie oscillante à onglet selon la revendication 8, caractérisée en ce que la fente est constituée par une rainure borgne (22).

10. Scie oscillante à onglet selon les revendications 7 et 8, caractérisée en ce que les surfaces latérales (13) de la manette transversale, du côté opposé à l'évidement (15) sont limitées par une bande de butée des pièces (14) qui comprend une ouverture de passage pour la lame de scie (3).

11. Scie oscillante à onglet selon l'une des revendications 5 à 10, caractérisée en ce qu'un ressort (41) formant contre-poids de l'ensemble scie et de la bride en "U" (4) est disposé sur la table circulaire (8).

12. Scie oscillante à onglet selon les revendications 6 et 7, caractérisée en ce que les branches (4a, 4b) du cadre en "U" (4) s'étendent dans le plan du palier (10, 9) de la table circulaire (8), sensiblement au-dessous de la surface (13) d'appui des pièces à scier.

13. Scie oscillante à onglet selon l'une des revendications 1 à 12, caractérisée en ce que l'ensemble de scie et l'extrémité libre des branches porteuses (4a) de la bride (4) est munie d'une poignée de commande (40) pour le sciage en onglet.

14. Scie oscillante à onglet selon l'une des revendications 5 à 13, caractérisée en ce qu'une butée terminale (34) pour la position la plus extérieure de la scie est prévue sur la table circulaire (8).

15. Scie oscillante à onglet selon la revendication 14, caractérisée en ce que la butée terminale (34) est réglable.

16. Scie oscillante à onglet selon la revendication 15, caractérisée en ce que dans la table circulaire (8) et sur la surface latérale (13) est prévue une table complémentaire (31) démontable pour l'installation de la table de scie qui comprend une fente d'entrée (32) pour la lame de scie (3).
